Europäisches Patentamt

European Patent Office

Office européen des brevets

(19)

(11) Veröffentlichungsnummer: **0 148 352**
**B1**

# EUROPÄISCHE PATENTSCHRIFT

(12)

(45) Veröffentlichungstag der Patentschrift:
30.03.88

(21) Anmeldenummer: **84113172.5**

(22) Anmeldetag: **02.11.84**

(51) Int. Cl.⁴: **F 17 D  5/04,** F 15 B  20/00,
B 23 Q  1/00

(54) **Vorrichtung zur Flüssigkeitsversorgung eines Verbrauchers.**

(30) Priorität: **09.11.83  DE 3340467**

(43) Veröffentlichungstag der Anmeldung:
**17.07.85 Patentblatt 85/29**

(45) Bekanntmachung des Hinweises auf die Patenterteilung:
**30.03.88 Patentblatt 88/13**

(84) Benannte Vertragsstaaten:
**AT CH DE FR GB IT LI**

(56) Entgegenhaltungen:
FR - A - 2 377 571
GB - A - 2 023 296
US - A - 2 838 074
US - A - 2 956 586
US - A - 4 268 007

(73) Patentinhaber: **Denk, Herbert, Ortsrand Echenbrunn 7,
D-8883 Gundelfingen (DE)**

(72) Erfinder: **Denk, Herbert, Ortsrand Echenbrunn 7,
D-8883 Gundelfingen (DE)**

(74) Vertreter: **Munk, Ludwig, Dipl.-Ing., Patentanwalt
Prinzregentenstrasse 1, D-8900 Augsburg (DE)**

ACTORUM AG

## Beschreibung

Die Erfindung betrifft eine Vorrichtung zur Flüssigkeitsversorgung eines Hydraulikmotors, der an eine durch eine Pumpe beaufschlagbare Vorlaufleitung und an eine in ein druckloses Reservoir mündende Rücklaufleitung angeschlossen ist, wobei die Vorlaufleitung innerhalb der eine Schutzleitung bildenden Rücklaufleitung angeordnet ist, in welcher ein wesentlich unterhalb des Arbeitsdrucks in der Vorlaufleitung liegender Restdruck aufrechterhalten wird.

Eine Vorrichtung dieser Art ist aus der US-A-28 38 074 bekannt. Bei dieser bekannten Anordnung wird zwar infolge der hier vorgesehenen Schutzleitung ein mechanischer Schutz der unter hohem Druck stehenden Vorlaufleitung gegen Abrieb etc. erreicht. Bei der bekannten Anordnung ist jedoch keine Sicherheitseinrichtung zum Absperren der Vorlaufleitung im Falle eines Abfalls des Restdrucks in der Schutzleitung vorgesehen. In der Praxis kann es jedoch vorkommen, dass der gesamte Leitungsstrang etwa durch eine umfallende Blechtafel abgeschert wird. In einem solchen Falle besteht bei der bekannten Anordnung die Gefahr, dass die unter hohem Druck stehende Hydraulikflüssigkeit der Vorlaufleitung frei wird, so dass es im Strahlbereich dieser unter hohem Druck stehenden Hydraulikflüssigkeit zu starken Zerstörungen und Verletzungen kommen kann. Die bekannte Anordnung erweist sich demnach als nicht sicher genug. Zudem kann es hierbei im Falle einer Beschädigung des Leitungsstrangs auch zu einem hohen Verlust an Hydraulikflüssigkeit kommen. Mangels einer Absperrbarkeit der Vorlaufleitung ist hier auch ein kontinuierlicher Pumpenbetrieb nur dort möglich, wo ein kontinuierlicher Motorbetrieb vorliegt. In der Praxis, insbesondere im Zusammenhang mit mobilen Arbeitsgeräten, ist es jedoch häufig erforderlich, den Motor mit Unterbrechungen zu aktivieren und zu passivieren.

Aus der GB-A-20 23 296 ist zwar eine Vorrichtung zur Flüssigkeitsversorgung eines Verbrauchers bekannt, bei der eine Vorlaufleitung innerhalb einer Schutzleitung angeordnet ist, in welcher ein unter dem Druck in der Vorlaufleitung liegender Druck erzeugt wird, der mittels eines Fühlers abgetastet wird, der im Falle eines Abfalls des Drucks in der Schutzleitung die Flüssigkeitsbeaufschlagung der Vorlaufleitung sperrt. Bei dieser bekannten Anordnung wird jedoch die Schutzleitung nicht gleichzeitig als Rücklaufleitung verwendet. Die Aufrechterhaltung des Drucks in der Schutzleitung erfordert daher einen vergleichsweise grossen Aufwand. Zudem ist eine separate Rücklaufleitung erforderlich, was insbesondere im Zusammenhang mit mobilen Arbeitsgeräten die Handhabung erschwert. Ausserdem enthält auch diese Vorveröffentlichung keinen geeigneten Hinweis auf eine Kombination der insbesondere bei mobilen Arbeitsgeräten erforderlichen manuellen und automatischen Absperrbarkeit der Vorlaufleitung.

Hiervon ausgehend ist es daher die Aufgabe der vorliegenden Erfindung, eine Vorrichtung eingangs erwähnter Art so zu verbessern, dass nicht nur eine hohe Sicherheit, sondern auch eine hohe Bedienungsfreundlichkeit erreicht werden.

Diese Aufgabe wird dadurch gelöst, dass bei der Flüssigkeitsversorgung eines in ein mobiles Arbeitsgerät eingebauten Hydraulikmotors der Restdruck in der Rücklaufleitung mittels eines Fühlers abgetastet wird, der zumindest im Falle eines Abfalls des abgetasteten Restdrucks unter ein bestimmtes Mindestmass die Flüssigkeitsbeaufschlagung der Vorlaufleitung sperrt, die mittels eines Ventils absperrbar ist, dessen Betätigungsorgan mittels eines dem Hydraulikmotor zugeordneten Handschalters betätigbar ist, der einen Steuerausgang aufweist, dem der Steuerausgang des Fühlers überlagert ist.

Mit diesen Massnahmen werden die Nachteile der bekannten Anordnungen vollständig beseitigt. Der in der Rücklaufleitung aufrechterhaltene Restdruck dient hierbei in vorteilhafter Weise als Kontrolldruck, mittels dessen die Dichtheit des Systems leicht überprüfbar ist. Im Falle einer Beschädigung der äusseren Rücklaufleitung entfällt dabei zwangsläufig der Restdruck, wodurch die Beaufschlagung der Vorlaufleitung mit unter hohem Druck stehender Flüssigkeit sofort gesperrt wird, so dass praktisch auch der Rücklauf entfällt. Auch im Falle einer Abscherung des gesamten, aus Vorlauf- und Rücklaufleitung bestehenden Versorgungsstrangs wird die Beaufschlagung der unter hohem Druck stehenden Vorlaufleitung gesperrt, noch bevor aus der Vorlaufleitung Flüssigkeit in nennenswertem Umfange austreten kann. Die erfindungsgemässen Massnahmen gewährleisten somit eine hohe Sicherheit und vermeiden zudem einen nennenswerten Verlust an Hydraulikflüssigkeit. Gleichzeitig bleibt der Vorteil einer einfachen Handhabung aufgrund des Vorliegens eines einheitlichen, die Vorlaufleitung und die Rücklaufleitung enthaltenden Versorgungsstrangs erhalten. Ein weiterer Vorteil der erfindungsgemässen Massnahmen ist darin zu sehen, dass das zur Erhöhung der Sicherheit vorgesehene, der Vorlaufleitung zugeordnete Absperrventil auch zum Ein- und Ausschalten des Hydraulikmotors benutzt werden kann. Die erfindungsgemässen Massnahmen ermöglichen deshalb nicht nur einen kontinuierlichen Pumpenbetrieb, sondern gewährleisten auch kurze Ansprechzeiten bei der Aktivierung und Passivierung der Vorlaufleitung und zwar sowohl im Falle einer manuellen Betätigung des Handschalters als auch im Falle eines Ansprechens der erfindungsgemässen Sicherheitseinrichtung.

Vorteilhafte Weiterbildungen und zweckmässige Ausgestaltungen der übergeordneten Massnahmen ergeben sich aus den Unteransprüchen 2 bis 9.

Nachstehend wird ein Ausführungsbeispiel der Erfindung anhand der Zeichnung näher erläutert. Hierbei zeigen:

Figur 1 ein Blockschaltbild der erfindungsgemässen Vorrichtung,

Figur 2 einen Schnitt durch den die Vor- und Rücklaufleitung enthaltenden Versorgungsstrang und

Figur 3 einen Schnitt durch eine dem Versorgungsstrang zugeordnete Schlauchkupplung.

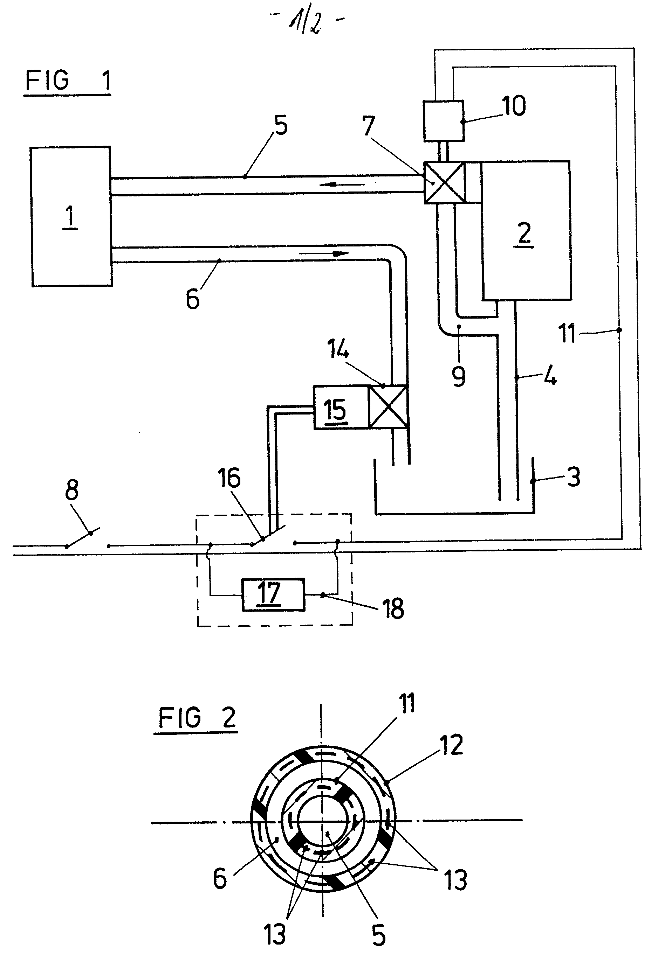

Die dem Blockschaltbild gemäss Figur 1 zugrundeliegende Vorrichtung besteht aus einem Hydraulikmotor 1, der durch eine Pumpe 2 mit Hydraulikflüssigkeit versorgt wird, die aus einem Reservoir 3 entnommen wird. Die Pumpe 2 ist saugseitig mit einem zum Reservoir 3 führenden Saugstutzen 4 und druckseitig mit einer zum Hydraulikmotor 1 führenden Vorlaufleitung 5 verbunden. Vom Hydraulikmotor 1 führt eine Rücklaufleitung 6 zurück zum Reservoir 3. Der Hydraulikmotor 1 dient zum Antrieb eines hier nicht näher dargestellten, mobilen Arbeitsgeräts, beispielsweise eines Schweisskantenfräsers. Die Vor- und Rücklaufleitungen 5 bzw. 6 sind daher als bewegliche Leitungen ausgebildet. Die Pumpe 2 wird durch einen hier nicht näher dargestellten Elektromotor kontinuierlich angetrieben. Zur Aktivierung bzw. Passivierung des ein Arbeitsgerät antreibenden Hydraulikmotors 1 ist ein am pumpenseitigen Ende der Vorlaufleitung 5 angeordnetes Ventil 7 vorgesehen, das mittels eines dem Hydraulikmotor 1 zugeordneten, zweckmässig auf dem hiervon angetriebenen Arbeitsgerät angeordneten Handschalters 8 geschaltet werden kann. Das Ventil 7 ist hier als Dreiwegeventil ausgebildet, dessen dritter Anschluss mit einem in den Saugstutzen mündenden Kurzschlussstutzen 9 verbunden ist. Zur Passivierung der Vorlaufleitung 5 werden diese mittels des Ventils 7 abgesperrt und die Pumpe 2 kurzgeschlossen. Dem Ventil 7 ist ein Betätigungsorgan 10 zugeordnet, das mittels des Handschalters 8 aktivierbar bzw. passivierbar ist. Hierzu ist eine über den Handschalter 8 zum Betätigungsorgan 10 führende Signalleitung 11 vorgesehen. In der Praxis kann das Ventil 7 einfach als Schieberventil ausgebildet sein, dessen Schieber mittels einer das Betätigungsorgan 10 bildenden Magnetanordnung verschiebbar ist, die mittels des Handschalters 8 aktivierbar bzw. passivierbar ist. Zur Bildung der Signalleitung 11 ist daher ein an einer Niederspannungsquelle liegender Schaltstromkreis vorgesehen.

Die Vorlaufleitung und die Rücklaufleitung sind im Blockschaltbild gemäss Figur 1 nebeneinanderliegend dargestellt. In der praktischen Ausführung sind die Vorlaufleitung 5 und die Rücklaufleitung 6, wie Figur 2 zeigt, durch ineinandergesteckte, radialen Abstand aufweisende Schläuche 11 bzw. 12 begrenzt. Die Schläuche 11 bzw. 12 sind in an sich bekannter Weise mit einer Stahlarmierung 13 versehen, die im Falle eines Schaltstromkreises als Signalleitung Verwendung finden kann. Der vom inneren Schlauch 11 begrenzte Strömungsweg bildet die Vorlaufleitung 5, die mit unter hohem Druck in der Grössenordnung von 200 bar stehender Flüssigkeit beaufschlagt wird. Der vom äusseren Schlauch 12 und vom inneren Schlauch 11 begrenzte, im Querschnitt ringförmige Strömungsweg bildet die Rücklaufleitung 6, die in das Reservoir 3 mündet.

Sofern der innere Schlauch 11 platzen sollte, steht der äussere Schlauch 12 noch als Sicherheitsmantel zur Verfügung. Dasselbe gilt für den Fall einer äusseren Beschädigung. In diesem Falle kann nämlich der innere Schlauch 11 erst beschädigt werden, nachdem zuvor der äussere Schlauch 12 beschädigt wurde. In jedem Falle wird die Beaufschlagung der Vorlaufleitung 5 mit Druckflüssigkeit gesperrt, so dass keine unter hohem Druck stehende Flüssigkeit freiwerden kann.

Hierzu wird die vom äusseren Schlauch 12 begrenzte Rücklaufleitung 6 im normalen Betrieb unter einem Restdruck von etwa 5 bar gehalten, der als Kontrolldruck dient. Hierzu ist in der Rücklaufleitung 6 ein mündungsseitig angeordnetes Drosselventil 14 vorgesehen. Zum Abtasten des Restdrucks ist ein Fühler 15 vorgesehen, der im Falle eines Druckabfalls unter bzw. im Falle eines Druckanstiegs über ein vorgegebenes Niveau in der Grössenordnung von 5 bar das dem in der Vorlaufleitung 5 angeordneten Ventil 7 zugeordnete Betätigungsorgan 10 unabhängig von der Stellung des Handschalters 8 so betätigt wird, dass die Vorlaufleitung 5 gesperrt und die Pumpe 2 kurzgeschlossen werden. Im dargestellten Ausführungsbeispiel gemäss Fig. 1 ist hierzu einfach ein dem Handschalter 8 nachgeordneter Schalter 16 vorgesehen, der durch den Fühler 15 betätigbar ist. Hierdurch wird erreicht, dass der Signalausgang des Fühlers 15 dem Signalausgang des Schalters 8 praktisch überlagert wird.

Bei Inbetriebnahme der Vorrichtung gemäss Fig. 1 muss der Fühler 15 kurzzeitig passiviert werden, um den Aufbau des Restdrucks zu ermöglichen. Im dargestellten Ausführungsbeispiel ist hierzu der dem Fühler 15 zugeordnete Schalter 16 durch eine über ein Zeitglied 17 führende Überbrückungsleitung 18 überbrückt. Das Zeitglied 17 wird beim Schliessen des Handschalters 8 kurzzeitig durchlässig und geht anschliessend selbsttätig in eine Unterbrecherstellung, wodurch die Überbrückung wieder entfällt. Sofern zu diesem Zeitpunkt der vorgeschriebene Restdruck in der Rücklaufleitung 6 besteht, bleibt der dem Fühler 15 zugeordnete Schalter 16 in seiner Schliessstellung. Sofern der vorgeschriebene Restdruck über- bzw. unterschritten wird, wird der Schalter 16 geöffnet, so dass bei Wegfall der durch das Zeitglied 17 bewirkten Überbrückung das Betätigungsorgan 10 trotz geschlossenen Handschalters 8 das Signal zum Absperren der Vorlaufleitung 5 erhält. Das Ventil 7 und der das diesem zugeordnete Betätigungsorgan 10 bildende Elektromagnet sind so ausgebildet und angeordnet, dass die Vorlaufleitung 5 bei aktivierter Signalleitung 11, d.h. im Falle einer Stromversorgung des das Betätigungsorgan 10 bildenden Elektromagneten, mit der Pumpe 2 verbunden und bei passivierter Signalleitung 11, d.h. bei Wegfall der Stromversorgung des Elektromagneten, von der Pumpe 2 getrennt ist. Hierdurch ist sichergestellt, dass im Falle eines Stromausfalls in dem die Signalleitung 11 bildenden Niederspannungskreis sicherheitshalber eine Passivierung der Vorlaufleitung 5 erfolgt. Dasselbe gilt für den Fall, dass die Signalleitung 11 beschädigt wird, was leicht vorkommen kann, wenn diese über die Stahlarmierungen 13 läuft.

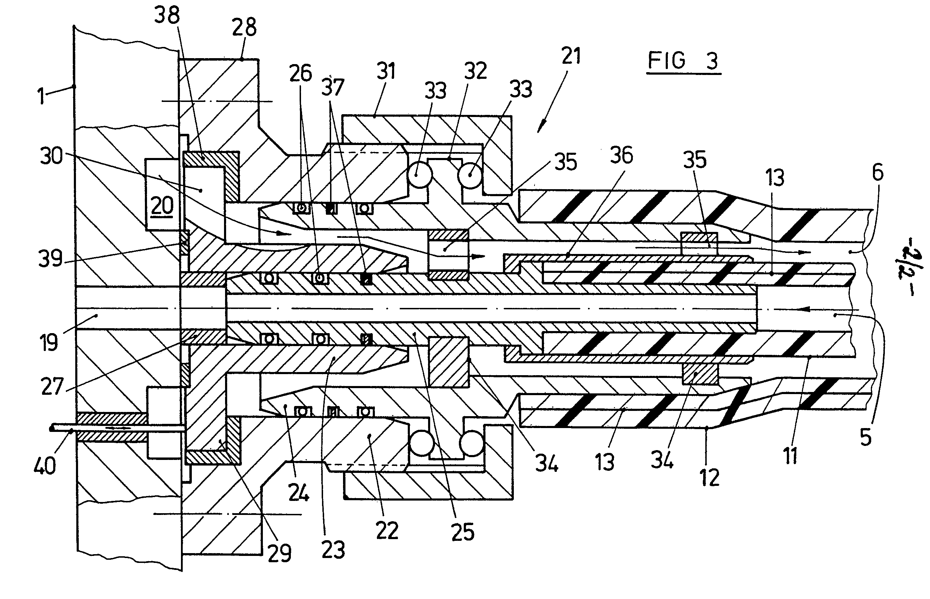

Der Hydraulikmotor 1 ist, wie Fig. 3 zeigt, mit einem zentralen Einlasskanal 19 und einem diesen ringförmig umgebenden Auslasskanal 20 versehen, die mittels des durch die ineinander angeordneten Schläuche 11, 12 gebildeten Versorgungsstrangs mit entsprechenden Kanälen der Pumpe 2 bzw. des Ventils 7 verbunden sind. Die Pumpe 2 bzw. das Ventil 7 sind dementsprechend so ausgebildet, dass die zum Reservoir 3 führende Rücklaufleitung 6 nicht unterbrochen wird. Zur Verbindung des durch die Schläuche 11 bzw. 12 gebildeten Versorgungsstrangs mit dem Hydraulikmotor 1 bzw. der Pumpe 2 können Schlauchkupplungen der in Fig. 3 dargestellten Art vorgesehen sein. Im dargestellten Ausführungsbeispiel sollen die pumpenseitigen Enden der Schläuche 11, 12 durch feste Schlauchverbindungen mit dem Pumpen- bzw. Ventilgehäuse verbunden sein. Zur Verbindung der motorseitigen Ein- bzw. Auslasskanäle 19 bzw. 20 mit dem motorseitigen Ende des durch die Schläuche 11, 12 gebildeten, die Vorlaufleitung 5 und die Rücklaufleitung 6 enthaltenden Versorgungsstranges ist eine Kupplung 21 vorgesehen, die zwei konzentrisch ineinander angeordnete, den beiden Schläuchen 11, 12 jeweils zugeordnete Steckverbindungen aufweist. Die Kupplung 21 besteht, wie Fig. 3 weiter erkennen lässt, aus zwei am Gehäuse des Hydraulikmotors 1 festgelegten, mit radialem Abstand konzentrisch ineinander angeordneten Büchsen 22 bzw. 23, in die jeweils das vordere Ende eines zugeordneten Nippels 24 bzw. 25 dichtend einsteckbar ist, der mit seinem hinteren Ende den jeweils zugeordneten Schlauch 11 bzw. 12 aufnimmt. Zur Bewerkstelligung einer zuverlässigen Abdichtung sind im Bereich des Umfangs der Nippel 24 bzw. 25 angeordnete Dichtringe 26 vorgesehen. Die zur Vorlaufleitung 5 gehörende Bohrung des den inneren Schlauch 11 aufnehmenden inneren Nippels 25 fluchtet mit der den Einlasskanal 19 bildenden Bohrung. Zur Bewerkstelligung einer störungsfreien Strömung im Bereich der Vorlaufleitung 5 ist in die innere Büchse 23 ein am Gehäuse des Hydraulikmotors 1 anliegender Dichtring 27 eingelegt, an dem der zugeordnete Nippel 25 anläuft. Der den Auslasskanal 20 bildende Ringraum mündet in den zwischen der äusseren Büchse 22 bzw. dem dieser zugeordneten Nippel 24 und der hiergegen radialen Abstand besitzenden inneren Büchse 23.

Die äussere Büchse 22 ist mit dem Gehäuse des Hydraulikmotors 1 verschraubt. Hierzu ist die Büchse 22 mit einem motorseitig angeformten Befestigungsflansch 28 versehen. Die innere Büchse 23 wird durch die äussere Büchse 22 am Gehäuse des Hydraulikmotors 1 festgelegt. Hierzu ist die innere Büchse 23 mit einem in eine zugeordnete Ausnehmung der äusseren Büchse 22 eingreifenden Halteflansch 29 versehen. Der Halteflansch 29 ist zur Bildung eines Strömungswegs vom Auslasskanal 20 zu dem zur Rücklaufleitung 6 gehörenden, durch die äussere bzw. innere Büchse 22, 23 begrenzten Ringraum mit durch Ausfräsungen gebildeten Durchströmöffnungen 30 versehen. Der äussere Nippel 24 ist mittels einer Überwurfmutter 31 an der äusseren Büchse 22 festlegbar. Zur Bewerkstelligung einer drehbaren Verbindung ist der äussere Nippel 24 mit einem über die Stirnseite der zugeordneten Büchse 22 auskragenden Stützflansch 32 versehen, der unter Zwischenschaltung von Kugellagern 33 an der Überwurfmutter 31 bzw. der zugewandten Stirnseite der Büchse 22 anliegt. Der innere Nippel 25 ist durch Zentrierringe 34 gegenüber dem äusseren Nippel 24 zentriert und in axialer Richtung abgestützt. Die Zentrierringe 34 sind mit Durchströmausnehmungen 35 versehen. Die Schläuche 11 bzw. 12 sind auf den jeweils zugeordneten Nippel 24, 25 aufgesteckt. Zur Sicherung des die Vorlaufleitung 5 begrenzenden inneren Schlauchs 11 ist eine diesen umfassende Schelle 36 vorgesehen.

Die zur Bildung der Signalleitung 11 herangezogenen Stahlarmierungen 13 der Schläuche 11 bzw. 12 sind mit ihrem nippelseitigen Ende freigelegt, nach aussen umgebogen und durch das Schlauchmaterial an den jeweils zugeordneten Nippel 24 bzw. 25 angepresst. Die Nippel 24, 25 und die diesen zugeordneten Büchsen 22, 23 sind als Metallformlinge ausgebildet, die sich ebenso wie die Stahlarmierungen 13 zur Übertragung einer elektrischen Spannung eignen. Zur Gewährleistung eines zuverlässigen elektrischen Kontakts zwischen Nippel und jeweils zugeordneter Büchse sind im Einsteckbereich angeordnete Kontaktringe 37 vorgesehen. Diese können einfach aus Bronze bestehen. Der über die Stahlarmierung 13 des äusseren Schlauchs 12 und die durch die äussere Büchse 22 und den dieser zugeordneten Nippel 24 gebildete äussere Steckverbindung laufende Ast des die Signalleitung 11 bildenden Schaltstromkreises kann als am Minuspol der Schaltstromquelle liegende Masseleitung ausgebildet sein. Die äussere Büchse 22 kann dementsprechend in elektrisch leitendem Kontakt mit dem Gehäuse des Hydraulikmotors 1 sein. Der über die Stahlarmierung 13 des inneren Schlauchs 11 sowie die durch die innere Büchse 23 und den dieser zugeordneten Nippel 25 gebildete innere Steckverbindung laufende Ast des die Signalleitung 11 bildenden Schaltstromkreises ist mit dem Pluspol der Schaltstromquelle verbunden. Hierdurch ergibt sich automatisch eine Isolation dieses Strompfads nach aussen. Zur Vermeidung eines Kurzschlusses sind der innere Nippel 25 gegenüber dem äusseren Nippel 24 und die innere Büchse 23 gegenüber der äusseren Büchse 22 und gegenüber dem Gehäuse des Hydraulikmotors 1 elektrisch isoliert. Hierzu sind die zur gegenseitigen Zentrierung der Nippel vorgesehenen Zentrierringe 34 als aus Kunststoff bestehende Isolationselemente ausgebildet. Die innere Büchse 23 ist durch im Bereich des Halteflansches 29 eingelegte Kunststoffringe 38 bzw. 39 an der äusseren Büchse 22 bzw. am Gehäuse des Hydraulikmotors 1 abgestützt. Der Ring 39 ist dabei so dick, dass die gehäuseseitige Stirnfläche des Halteflansches 29 vom Gehäuse distanziert ist. Die vom Gehäuse distanzierte Stirnfläche des Halteflansches 29 der inneren Büchse 23 stellt eine Kontaktfläche dar. Der dem Hydraulikmotor 1 zugeordnete Handschalter 8 ist zur Ermöglichung einer entsprechenden Kontaktgabe mit einem im Gehäuse des Hydraulikmotors 1 angeordneten, gegenüber dem Gehäuse isolierten Kontaktstift 40 versehen, aus der verschiebbar gelagert und durch Schaltbewegungen in und ausser Kontakt mit der Kontaktfläche des Halteflansches 29 bringbar ist. Im dargestellten Ausführungsbeispiel befindet sich der Kontaktstift 40 im radialen Bereich des Auslasskanals 20, so dass sich ein zuverlässiger Abstand der Kontaktstelle von benachbarten Wandungen des Gehäuses des Hydraulikmotors 1 ergibt, wodurch die Gefahr von Funkenschlag vermieden wird.

Sofern im Bereich des gegenüberliegenden Endes des durch die Schläuche 11, 12 gebildeten Versorgungsstrangs ebenfalls eine Schnellverbindung erwünscht ist, kann auch hier eine Kupplung der der Fig. 3 entnehmbaren Art vorgesehen sein. In diesem Falle ist die innere Büchse so anzuordnen, dass die Bohrung des dieser zugeordneten inneren Nippels mit dem Auslasskanal der Pumpe 2 bzw. des Ventils 7 fluchtet und der zwischen innerer und äusserer Büchse vorhandene Ringraum in einen zum Reservoir 3 führenden Kanal mündet.

Im geschilderten Ausführungsbeispiel soll der Fühler 15 so ausgebildet sein, dass der Schalter 16 sowohl beim Abfall des in der Rücklaufleitung 6 aufrechterhaltenen Drucks unter ein vorgegebenes Mindestmass als auch beim Ansteigen dieses Drucks über ein vorgegebenes Niveau in die der Fig. 1 zugrunde liegende Sperrstellung gebracht wird. In den meisten Ausführungsfällen genügt es jedoch, wenn die Zufuhr von Hydraulikflüssigkeit zur Vorlaufleitung 5 lediglich im Falle eines Abfalls des Restdrucks in der Rücklaufleitung 6 unter ein vorgegebenes Mindestmass gesperrt wird, da mit einem Platzen des die Vorlaufleitung 5 begrenzenden, mit Stahlarmierungen 13 versehenen Schlauchs 11 nicht gerechnet werden muss. Dies vereinfacht den Aufbau des Fühlers 15.

**Patentansprüche**

1. Vorrichtung zur Flüssigkeitsversorgung eines Hydraulikmotors (1), der an eine durch eine Pumpe (2) beaufschlagbare Vorlaufleitung (5) und an eine in ein druckloses Reservoir (3) mündende Rücklaufleitung (6) angeschlossen ist, wobei die Vorlaufleitung (5) innerhalb der eine Schutzleitung bildenden Rücklaufleitung (6) angeordnet ist, in welcher ein wesentlich unterhalb des Arbeitsdrucks in der Vorlaufleitung (5) liegender Restdruck aufrechterhalten wird, dadurch gekennzeichnet, dass bei der Flüssigkeitsversorgung eines in ein mobiles Arbeitsgerät eingebauten Hydraulikmotors (1) der Restdruck in der Rücklaufleitung (6) mittels eines Fühlers (15) abgetastet wird, der zumindest im Falle eines Abfalls des abgetasteten Restdrucks unter ein bestimmtes Mindestmass die Flüssigkeitsbeaufschlagung der Vorlaufleitung (5) sperrt, die mittels eines Ventils (7) absperrbar ist, dessen Betätigungsorgan (10) mittels eines dem Hydraulikmotor (1) zugeordneten Handschalters (8) betätigbar ist, der einen Steuerausgang aufweist, dem der Steuerausgang des Fühlers (15) überlagert ist.

2. Vorrichtung nach Anspruch 1, dadurch gekennzeichnet, dass die Beaufschlagung der Vorlaufleitung (5) mit Hydraulikflüssigkeit auch beim Ansteigen des Restdrucks über ein vorgegebenes Druckniveau gesperrt wird.

3. Vorrichtung nach einem der vorhergehenden Ansprüche, dadurch gekennzeichnet, dass die Vor- und Rücklaufleitung (5 bzw. 6) durch ineinandergesteckte, vorzugsweise mit Stahlarmierungen (13) versehene Schläuche (11 bzw. 12) begrenzt sind.

4. Vorrichtung nach einem der vorhergehenden Ansprüche, dadurch gekennzeichnet, dass die zum Betätigungsorgan (10) des Ventils (7) führende, über den Handschalter (8) und einen vom Fühler (15) betätigbaren Schalter (16) laufende Signalleitung (11) im Bereich des dem Fühler (15) zugeordneten Schalters (16) durch ein Zeitglied (17) überbrückt ist, das bei Betätigung des Handschalters (8) in Einschaltrichtung eine vorgegebene Zeitspanne aktiviert ist.

5. Vorrichtung nach einem der vorhergehenden Ansprüche, dadurch gekennzeichnet, dass das dem Ventil (7) zugeordnete Betätigungsorgan (10) als Elektromagnet und die diesem zugeordnete Signalleitung (11) als Stromleitung ausgebildet sind, die über die Stahlarmierung (13) des inneren und/oder äusseren Schlauchs (11 bzw. 12) zu dem Hydraulikmotor (1) zugeordneten Handschalter (8) führt.

6. Vorrichtung nach einem der vorhergehenden Ansprüche, dadurch gekennzeichnet, dass zumindest das motorseitige Ende, vorzugsweise beide Enden, der ineinander angeordneten Schläuche (11, 12) mittels einer Kupplung (21) am jeweils zugeordneten Aggregatgehäuse festlegbar ist bzw. sind, die zwei mit radialem Abstand konzentrisch ineinander angeordnete, jeweils eine aggregatseitig befestigte Büchse (22 bzw. 23) und einen in diese einsteckbaren, den zugeordneten Schlauch (11 bzw. 12) aufnehmenden Nippel (24 bzw. 25) enthaltende Steckverbindungen aufweist.

7. Vorrichtung nach Anspruch 6, dadurch gekennzeichnet, dass die innere Büchse (23) einen in eine zugeordnete Ausnehmung der äusseren, aggregatseitig festschraubbaren Büchse (22) eingreifenden, mit Durchströmausnehmungen (30) versehenen Halteflansch (29) aufweist, und dass der innere Nippel (25) durch mindestens einen mit Durchströmausnehmungen (35) versehenen, vorzugsweise aus Kunststoff bestehenden Zentrierring (34) gegenüber dem äusseren Nippel (24) zentriert in axialer Richtung am äusseren Nippel (24) abgestützt ist, der mittels einer Überwurfmutter (31) an der zugeordneten äusseren Büchse (22) und der Überwurfmutter (31) vorzugsweise durch Kugellager (33) drehbar gelagert ist.

8. Vorrichtung nach einem der vorhergehenden Ansprüche 6 bis 7, dadurch gekennzeichnet, dass der dem Hydraulikmotor (1) zugeordnete Handschalter (8) einen isolierten Kontaktstift (40) aufweist, der in und ausser Kontakt mit der zugewandten Stirnseite der inneren Büchse (23) bringbar ist, die durch eingelegte Kunststoffringe (38 bzw. 39) gegenüber der äusseren Büchse (22) und dem benachbarten Aggregatgehäuse isoliert ist.

9. Vorrichtung nach einem der vorhergehenden Ansprüche 6 bis 8, dadurch gekennzeichnet, dass im Bereich der Anlageflächen von Büchse (22 bzw. 23) und jeweils zugeordnetem Nippel (24 bzw. 25) jeweils mindestens ein vorzugsweise aus Bronze bestehender Kontaktring (37) vorgesehen ist und dass die Stahlarmierung (13) der auf jeweils einem zugeordneten Nippel (24 bzw. 25) aufgenommenen Schläuche (11 bzw. 12) nippelseitig freigelegt und in Kontakt mit dem zugeordneten Nippel (24 bzw. 25) gebracht ist.

**Revendications**

1. Dispositif pour alimenter en fluide un moteur hydraulique (1) raccordé à une conduite d'amenée (5) alimentée par une pompe (2) et à une conduite de retour (6) débouchant dans un reservoir sans pression (3), la conduite d'amenée (5) étant disposée à l'intérieur de la conduite de retour (6) qui forme un conduit protecteur et dans laquelle on maintient une pression résiduelle qui est sensiblement plus basse que la pression de travail régnant dans la conduite d'amenée (5), caractérisé en ce que, pour l'alimentation d'un moteur hydraulique (1) installé dans un outillage mobile, la pression résiduelle dans la conduite de retour (6) est détectée au moyen d'un capteur (15) qui, au moins en cas de chute de la pression résiduelle au-dessous d'un minimum prédéterminé, bloque l'alimentation en fluide de la conduite d'amenée (5), laquelle est agencée pour être bloquée par une soupape (7) dont l'organe d'actionnement (10) est commandé au moyen d'un interrupteur manuel (8) associé au moteur hydraulique (1), la sortie de commande du capteur (15) étant subordonnée à la sortie de cet interrupteur.

2. Dispositif selon la revendication 1, caractérisé en ce que l'alimentation en fluide hydraulique de la conduite d'amenée (5) est aussi bloquée quand la pression résiduelle monte au-dessus d'un niveau prédéterminé.

3. Dispositif selon l'une des revendications précédentes, caractérisé en ce que les conduites d'amenée et de retour (5 et 6) sont délimitées par des tuyaux (11 et 12) insérés l'un dans l'autre et pourvus de préférence d'armatures en acier (13).

4. Dispositif selon l'une des revendications précédentes, caractérisé en ce que la ligne de commande (11), conduisant à l'organe d'actionnement (10) de la soupape (7) et traversant l'interrupteur manuel (8) et un interrupteur (16) actionné par le capteur (15), est court-circuitée dans la zone de l'interrupteur (16) associé au capteur (15), par un élément temporisé qui est rendu actif pour une durée prédéterminée par une opération d'enclenchement de l'interrupteur manuel (8).

5. Dispositif selon l'une des revendications précédentes, caractérisé en ce que l'organe d'actionnement (10) de la soupape (7) est constitué par un électro-aimant et en ce que la ligne (11) de commande de celui-ci est une ligne électrique qui conduit à l'interrupteur manuel (8) associé au moteur hydraulique (1) en passant par l'armature en acier (13) du tuyau intérieur et/ou du tuyau extérieur (11, 12).

6. Dispositif selon l'une des revendications précédentes, caractérisé en ce qu'au moins l'extrémité côté moteur, et de préférence les deux extrémités des tuyaux insérés l'un dans l'autre (11, 12) est ou sont fixée(s) à un boîtier d'appareil respectif au moyen d'un connecteur (21) qui comporte deux accouplements à emboîtement disposés concentriquement l'un dans l'autre et comprenant chacun une douille (22, 23) fixée du côté de l'appareil et un raccord (24, 25) emboîtable dans celle-ci et monté sur le tuyau correspondant (11, 12).

7. Dispositif selon la revendication 6, caractérisé en ce que la douille intérieure (23) comporte une collerette de retenue (29) pourvue d'evidements (30) pour le passage du fluide et engagée dans un évidement correspondant de la douille extérieure (22) fixée par vissage du côté de l'appareil, et en ce que le raccord intérieur (25) est appuyé axialement contre le raccord extérieur (24), en position centrée par rapport à celui-ci, par l'intermédiaire d'une bague de centrage (34) pourvue d'évidements (35) pour le passage du fluide et réalisée de préférence en matière synthétique, le raccord extérieur (24) étant assemblé à la douille extérieure correspondante (22) au moyen d'un chapeau fileté (31), de préférence d'une manière rotative par rapport à ce chapeau (31) grâce à des roulements à billes (33).

8. Dispositif selon l'une des revendications 6 à 7, caractérisé en ce que l'interrupteur manuel (8) associé au moteur hydraulique (1) comporte une tige de contact isolée (40) agencée pour être mise en contact ou non avec la face frontale correspondante de la douille intérieure (23), laquelle est isolée par insertion de bagues en matière synthétique (38, 39) par rapport à la douille extérieure (22) et au boîtier adjacent de l'appareil.

9. Dispositif selon l'une des revendications 6 à 8, caractérisé en ce que, dans chacune des zones respectives de contact entre les douilles (22, 23) et les raccords correspondants (24, 25), il est prevu au moins une bague de contact (37) faite de préférence en bronze, et en ce que l'armature en acier (13) des tuyaux (11, 12) montés sur les raccords respectifs (24, 25) est dénudée du côté du raccord et se trouve en contact avec le raccord correspondant (24, 25).

**Claims**

1. A device for the supply of liquid to a hydraulic motor (1), which is connected with a feed (5) duct adapted to be supplied by a pump (2) and with a return duct (6) opening into a reservoir (3) which is not under pressure, the feed duct (5) being arranged within the return duct (6) constituting a shield duct and in which a residual pressure is maintained which is substantially lower than the working pressure in the feed duct characterized in that in the case of the supply of liquid to a hydraulic motor (1) incorporated in mobile equipment the residual pressure in the return duct (6) is detected by means of a sensor (15), which at least in the case of a drop of the sensed residual pressure under a certain minimum level shuts off the supply of liquid via the feed duct, which may be shut off by means of a valve (7), whose actuating member (10) is able to be operated by a means of a manual switch (8) associated with the hydraulic motor (1), such switch having a control output which is subject to the control output of the sensor (15).

2. The device as claimed in claim 1 characterized in that the supply to the feed duct (5) of hydraulic liquid is also shut off when the residual pressure increases above a preset pressure level.

3. The device as claimed in any one of the preceding claims characterized in that the feed and return ducts (5 and 6) are delimited by telescoped flexible pipes (11 and 12, respectively) which are preferably provided with steel reinforcement.

4. The device as claimed in any one of the preceding claims characterized in that the signal line (11) leading to the actuating member (10) of the valve (7) and extending via the manual switch (8) and a switch (16) adapted to be operated by the sensor (15) is bridged over adjacent to the switch (16) for the sensor (15) by a timer (17) which is activated on operation of the manual switch (8) to turn it on for a preset period of time.

5. The device as claimed in any one of the preceding claims characterized in that the actuating member (10) associated with the valve (7) is designed as a solenoid and the the signal line (11) associated therewith is in the form of a current conductor, which leads via the steel reinforcement (13) of the inner and/or outer flexible pipe (11 and 12, respectively) to the manual switch (8) associated with the hydraulic motor (1).

6. The device as claimed in any one of the preceding claims characterized in that at least the motor end and preferably both ends of the telescoped flexible pipes (11 and 12) are secured to the respectively associated equipment housing by means of a coupling (21), same comprising plug-in connections which are arranged concentrically to each other with a radial clearance, each have a bushing (22 and 23, respectively) secured to the equipment and a male member (24 and 25, respectively) receiving the respective flexible pipe (11 and 12, respectively).

7. The device as claimed in claim 6 characterized in that the inner bushing (23) has a retainer flange (29) provided with passage openings (30) and fitting into an associated recess in the outer bushing (22) able to be screwed fast on the equipment, and in that the inner male part (25) supported and centered in relation to the outer male part (24) by at least one centering ring (34), preferably consisting of plastic, and having passage openings (35) in relation to the outer male part (24) in a radial direction, said outer male part (24) being rotatably secured by means of a union nut (31) on the associated outer bushing (22) and the union nut (31) preferably by means of ball bearings (33).

8. The device as claimed in any one of the preceding claims 6 through 7 characterized in that the manual switch (8) associated with the hydraulic motor (1) has an insulating pin (40), which is able to be moved into and out of contact with the inner bushing (23), which is insulated by inserted plastic rings (38 and 39, respectively) from the outer bushing (22) and the adjacent equipment housing.

9. The device as claimed in any one of the claims 6 through 8 characterized in that adjacent to the abutting surfaces of the bushing (22 and 23, respectively) and the respectively associated male part (24 or 25) there is at least one contact ring (37) preferably made of bronze and in that the steel reinforcement (13) of the flexible pipes (11 and 12, respectively) placed on the a respectively associated male part (24 and 25) is exposed adjacent to the male part (24 and 25) and is in contact therewith.

– 1/2 –

FIG 1

FIG 2

FIG 3

0 148 352